# EUROPÄISCHE PATENTSCHRIFT

(11) **EP 2 818 742 B1**
(45) Veröffentlichungstag und Bekanntmachung des Hinweises auf die Patenterteilung: **02.01.2019**
(21) Anmeldenummer: 14172256.1
(22) Anmeldetag: 13.06.2014
(51) Int. Cl.: F16C 35/067, F16C 43/04, A47J 43/07, A47J 43/08, F16C 19/08

(54) **Einbauteil, beispielsweise einer Küchenmaschine sowie Küchenmaschine mit einem Rührgefäß**
Built-in part, for example of a kitchen appliance and kitchen appliance with a mixing vessel
Composant, par exemple, une machine de cuisine, ainsi que machine de cuisine dotée d'un récipient mélangeur

(30) Priorität: 24.06.2013 DE 102013106565
(43) Veröffentlichungstag der Anmeldung: 31.12.2014
(73) Patentinhaber: Vorwerk & Co. Interholding GmbH, 42275 Wuppertal (DE)
(72) Erfinder: Büttner, Oliver, 42283 Wuppertal (DE); Schiffer, Ernst-Uwe, 42111 Wuppertal (DE); Arnold, Hans-Peter, 58566 Kierspe (DE); Zachos, Alexandros, 45131 Essen (DE)
(74) Vertreter: Müller, Enno

(56) Entgegenhaltungen:
- CN-A- 101 822 498
- JP-A- 2009 185 859
- JP-A- 2009 185 860
- US-A1- 2010 116 152
- US-B1- 6 974 244

## Beschreibung

Die Erfindung betrifft zunächst ein Einbauteil, beispielsweise einer Küchenmaschine, mit einer Welle, wobei die Welle mittels zweier axial hintereinander positionierter Wälzlager mit jeweils einem Innenring und einem Außenring gelagert ist und die Wälzlager durch in einem von der Welle durchsetzten Aufnahmeteil aufgenommen sind.

Einbauteile der in Rede stehenden Art sind bekannt, so beispielsweise in Form eines Messerlagers für ein Rührwerk in einem Rührgefäß einer Küchenmaschine. Hierbei ist eine, das Einbauteil bevorzugt insgesamt durchsetzende Welle vorgesehen, die einerends bevorzugt über einen elektromotorischen Antrieb drehantreibbar ist und weiter bevorzugt anderenends ein Werkzeug, beispielsweise einen Messer- oder Rührwerksatz trägt. Die Welle ist in dem Einbauteil über in Axialrichtung zueinander distanzierte Wälzlager gelagert, wobei für einen ruhigen Lauf insbesondere der Welle eine Lagervorspannung, d.h. eine Vorspannung der zueinander distanzierten Wälzlager in Axialrichtung aufeinander zu, eingestellt wird. Hierzu ist es weiter bekannt, entsprechend auf ein oder beide Lager einwirkende Federelemente in das Einbauteil einzusetzen.

Bei einem aus der JP 2009185860 A bekannten Einbauteil ist eine Hülse umgeben zu einer feststehenden Achse angeordnet und die Hülse über zwei Wälzlager an der Achse abgestützt. Die Hülse ist innenseitig gestuft ausgebildet. Die Außenringe unterschiedlichen Durchmessers, wobei der Außenring größeren Durchmessers einem freien Ende der Achse zugeordnet ist, sitzen jeweils auf einer Stufenfläche des Aufnahmeteils auf. Die Innenringe der Wälzlager sind in Axialrichtung nicht gegeneinander abgestützt.

Aus der CN 101822498 A ist eine Küchenmaschine mit einem Rührgefäß und darin angeordnetem Rührwerk mit einer Welle bekannt. Die Welle ist mittels zweier axial hintereinander positionierter Wälzlager gelagert.

Aus der JP 2009185589 A sind übereinander angeordnet in einer Aufnahme vorgesehene Wälzlager bekannt, bei welchen die Außenringe einen selben Durchmesser aufweisen und die Innenringe durch eine Hülse gegeneinander abgestützt sind.

Zum Stand der Technik ist auch auf die US 2010/0116152 A2 und die US 6,974,244 B1 zu verweisen.

Die Erfindung beschäftigt sich mit der Aufgabenstellung, bei guter Montierbarkeit eine zuverlässige Lagerung mit vorteilhafter Einstellbarkeit zu erreichen.

Diese Aufgabe ist beim Gegenstand des einzigen Anspruches gelöst, wobei jedenfalls von Besonderheit ist, dass die Welle mittels der Wälzlager in dem von der Welle durchsetzten topfförmigen, einen im Topfboden mittig ausgebildeten Durchlass für die Welle aufweisenden Aufnahmeteil gelagert ist, wobei beide Außenringe mit dem Aufnahmeteil verklebt sind und die Außenringe unterschiedliche Außendurchmesser aufweisen, während die Innenringe denselben Durchmesser aufweisen, wobei der durchmesservergrößerte Außenring in einer axial verbreiterten, sich zu einer Topföffnung hin öffnenden Erweiterung eines Topfinneren einsitzt, während sich der Außenring des unteren Wälzlagers unmittelbar an der Topfinnenwand abstützt, wobei weiter die Erweiterung ausgehend von einer Topföffnungsebene eine größere axiale Länge aufweist als der einliegende und sich an der Wandung der Erweiterung abstützende Außenring, wobei weiter das untere Wälzlager sich auf dem Topfboden abstützt und die Wälzlager in Erstreckungsrichtung der Welle zueinander beabstandet sind, wobei ein Distanzteil zwischen den Wälzlagern vorgesehen ist, das von der Welle durchsetzt ist und die Wälzlager im Bereich der Innenringe abstützt, wobei weiter der obere, dem Abtriebsende der Welle zugeordnete Außenring an der zugeordneten Innenfläche des Aufnahmeteils allein durch Verklebung gehalten ist und vor einer Aushärtung des Klebstoffes in seinem Axialsitz bis zum Erreichen der vorgegebenen Lagervorspannung in Axialrichtung der Welle betrachtet verlagerbar ist.

Die Verklebung des oberen Außenrings mit dem Aufnahmeteil dient bevorzugt zur Erhaltung der im Zuge der Monate eingestellten Lagervorspannung, welche Lagervorspannung entsprechend nach Aushärten des Klebstoffes ohne weitere Einwirkung auf das eine oder beide Wälzlager beibehalten wird.

Auf die Anordnung von beispielsweise in dem Einbauteil vorzusehender, zumindest auf ein Wälzlager einwirkender Federelemente kann verzichtet werden. Entsprechend ist hierdurch weiter eine Bauteilreduzierung, darüber hinaus eine Gewichtseinsparung erreicht. Die unterschiedlichen Außendurchmesser der Außenringe beider Wälzlager bieten insbesondere einen Vorteil im Zuge der Montage. Die Wälzlager sind verwechselungsfrei in das Aufnahmeteil einsetzbar. Dies erweist sich weiter bevorzugt auch dann von Vorteil, wenn hinsichtlich des Aufbaus unterschiedliche Wälzlager eingesetzt werden. Auch ist hierdurch die Montage der beiden Wälzlager von einer Seite des Aufnahmeteils betrachtet her ermöglicht, so insbesondere in einer vorgegebenen Reihenfolge, in welcher bevorzugt zunächst das durchmesserkleinere Wälzlager eingesetzt wird und hiernach das durchmessergrößere. Die Innendurchmesser der Wälzlager sind bevorzugt gleich gewählt, weiter insbesondere angepasst an den Außendurchmesser der Welle. Die Außendurchmesser der Außenringe der Wälzlager stehen weiter bevorzugt in einem Verhältnis von 1:1,05 bis hin zu 1:2, weiter bevorzugt etwa 1:1, 2-1:1,3. Die zugeordneten Aufnahmebereiche der Wälzlager in dem Aufnahmeteil sind weiter bevorzugt entsprechend durchmesserangepasst, insbesondere zum Anbieten einer wandungsaußenseitig der Außenringe umlaufenden Klebezone.

Der dem Antriebsende der Welle zugewandte Außenring des entsprechenden Wälzlagers sitzt auf einem Widerlager des Aufnahmeteils auf. Das Widerlager ist durch den Topfboden des Aufnahmeteils gebildet. Der Außenring des unteren Wälzlagers ist entsprechend im Zuge der Einstellung der Lagervorspannung nicht in seinem axialen Sitz verlagerbar.

Bei topfteilförmiger Ausbildung des Aufnahmeteils mit dem im Topfboden mittig ausgebildeten Durchlass für die Welle ist das Topfinnere des Aufnahmeteiles durchsetzt von der Welle und nimmt darüber hinaus die Wälzlager auf. Weiter bevorzugt ist die dem Topfboden abgewandte Topföffnung des Aufnahmeteiles überdeckt von einem insbesondere die Wälzlager schützenden Deckel.

Im Hinblick auf eine Ausgestaltung des Einbauteiles als Rührwerk ist der durchmessergrößere Außenring rührwerkseitig vorgesehen, d.h. dem Bereich der Welle zugeordnet, der die Rührwerkausbildung, beispielsweise in Form von Rührwerkmessern, zugewandt ist.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, ggf. also auch dimensionslos, insbesondere 1,01-Fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich ein Ausführungsbeispiel darstellt. Auf der Zeichnung zeigt:
- Fig. 1: in einer Seitenansicht eine Küchenmaschine der in Rede stehenden Art mit einem Rührgefäß und einem Rührwerk in dem Rührgefäß;

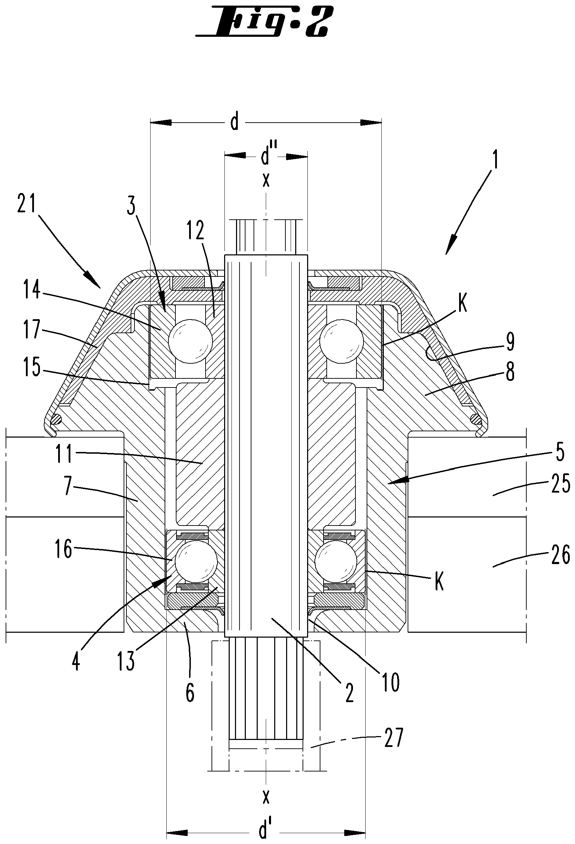

- Fig. 2: in einer Vertikalschnittdarstellung das Rührwerk in Zuordnungsstellung zum Rührgefäßboden;
- Fig. 3: bis
- Fig. 5: ein Fügewerkzeug zur Montage von Wälzlagern in ein Aufnahmeteil des Rührwerks, aufeinanderfolgende Vor-Montageschritte betreffend;

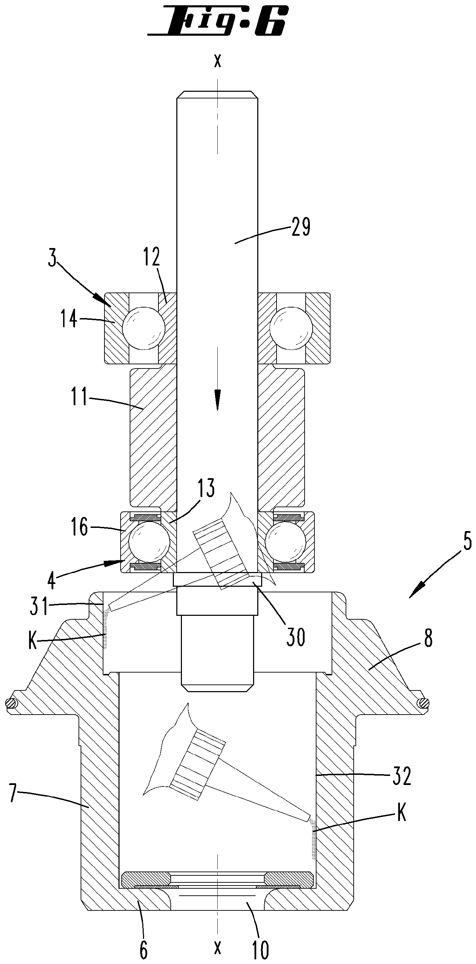

- Fig. 6: das mit den Wälzlagern und einem Distanzteil versehene Fügewerkzeug im Zuge der Bestückung des Aufnahmeteiles mit den Wälzlagern;
- Fig. 7: eine der Figur 6 entsprechende Darstellung, die Fügeposition betreffend.

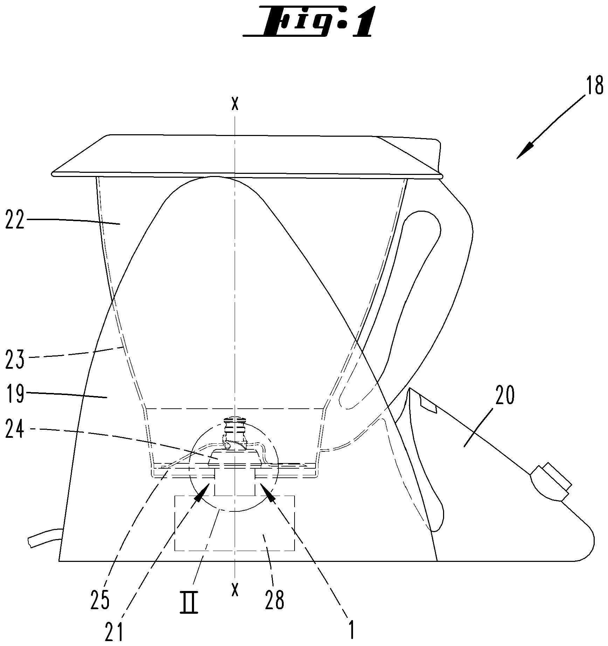

Dargestellt und beschrieben ist zunächst mit Bezug zu Figur 1 eine Küchenmaschine 18, insbesondere elektromotorisch betriebene Küchenmaschine. Sie weist zumindest ein Gehäuse 19 auf, mit einem Bedienfeld 20. Im Bereich des Bedienfeldes 20 sind bevorzugt mehrere Bedienelemente in Form von Schaltern oder Drehstellern vorgesehen, so insbesondere zur Einstellung einer Drehzahl eines Rührwerks 21.

Der Küchenmaschine 18 ist ein Rührgefäß 22 zuordbar. Dieses wird zur Nutzung in eine Rührgefäßaufnahme 23 der Küchenmaschine 18 eingesetzt.

Bodenseitig des Rührgefäßes 22 weist dieses das Rührwerk 21 auf. Dieses besitzt ein um eine Wellenachse x drehbares, im Bodenbereich des Rührgefäßes 22 wirkendes Messerwerk 24.

Das Rührwerk 21 ist als Einbauteil 1 gestaltet, weiter bevorzugt insbesondere zur Reinigung von dem Rührgefäß 22 lösbar. Hierzu durchsetzt das Rührwerk 21 im Wesentlichen eine zentrale Öffnung des Rührgefäßbodens 25.

Die Festlegung des Rührwerkes 21 am Rührgefäß 22 erfolgt in bevorzugter Ausgestaltung zufolge einer bajonettartigen Verriegelung unter Nutzung eines sich unterhalb des Rührgefäßbodens 25 erstreckenden Riegelteiles 26.

Insbesondere die Welle 2 des Rührwerks 21 ragt in Zuordnungsstellung des Rührgefäßes 22 zur Rührgefäß-Aufnahme 23 nach unten frei aus, zur formschlüssigen Verbindung mit einer Kupplungsaufnahme 27 eines in der Küchenmaschine 18 vorgesehenen elektromotorischen Antriebs 28. Hierzu ist das freie Ende der Welle bevorzugt als Mehrkant ausgebildet. Die Kupplungsaufnahme 27 weist eine entsprechende Aufnahmeöffnung auf.

Das Einbauteil 1 beziehungsweise Rührwerk weist zunächst eine Welle 2 auf, über welche im Betriebszustand das in Figur 1 dargestellte Messerwerk 24 in dem Rührgefäß 22 der Küchenmaschine 18 antreibbar ist.

Die Welle 2 ist über zwei in Axialrichtung der Welle zueinander distanzierte Wälzlager 3, 4 in einem Aufnahmeteil 5 des Einbauteiles 1 gelagert.

Das Aufnahmeteil 5 ist insgesamt im Wesentlichen topfförmig gestaltet, mit einem Topfboden 6 und einer, bei rotationssymmetrischer Ausgestaltung des Aufnahmeteiles 5 umlaufenden Topfwandung 7. Letztere geht abgewandt der Topfwandung 6 bevorzugt über in einen Konusabschnitt 8, welcher wandungsaußenseitig eine im Axialquerschnitt gemäß Figur 1 mit zunehmender Beabstandung zum Topfboden 6 in Richtung auf eine Wellenachse x geneigte Konusfläche 9 bildet.

Die Welle 2 durchsetzt den Topfboden 6 im Bereich eines Durchlasses 10, hierbei weiter das Topfinnere des Aufnahmeteils 5 durchsetzend, wobei die Wellenachse x in der Montagesituation gemäß Figur 1 bevorzugt zugleich auch die Mittelachse des Einbauteiles 1 darstellt.

Die Welle 2 stützt sich innerhalb des Aufnahmeteiles 5 über die zwei axial zueinander beabstandeten Wälzlager 3 und 4 ab. Hierbei ist das Wälzlager 4 mit Bezug auf die Darstellung unten angeordnet, sich hierbei mittelbar oder unmittelbar auf der zugewandten Oberfläche des Topfbodens 6 abstützend.

Die Wälzlager 3 und 4 sind zueinander über ein Distanzteil 11 beabstandet, welches Distanzteil 11 als rotationssymmetrisches Bauteil, die Welle 2 frei umfassend ausgebildet ist. Die jeweils in Axialrichtung weisenden Stirnflächen des Distanzteiles 11 sind hierbei so ausgebildet, dass diese bevorzugt nur auf den jeweils zugewandten Innenring 12,13 des jeweiligen Wälzlagers 3, 4 wirkt.

Das weitere Wälzlager 3, welches im Betriebszustand des Einbauteiles 1 bevorzugt dem, das Messerwerk tragenden Ende der Welle 2 zugeordnet ist, ist gegenüber dem unteren Wälzlager 4 durchmesservergrößert, dies weiter hinsichtlich des Außendurchmessers des Außenringes 14. Während dieser Außenring 14 in einer axial verbreiterten, sich zur Topföffnung hin öffnenden Erweiterung 15 des Topfinneren einsitzt, stützt sich der Außenring 16 des unteren Wälzlagers 4 unmittelbar an der Topfinnenwandung ab. Der Durchmesser d des Außenringes 14 des oberen, bevorzugt dem Abtriebsende beziehungsweise dem Messerwerk 24 zugewandten Wälzlagers 3 ist bevorzugt um das 1,2- bis 1,3-Fache größer gewählt als der Außendurchmesser d' des unteren, antriebsseitigen Wälzlagers 4. Die Innendurchmesser d" beider Wälzlager 3 und 4 sind gleich, weiter bevorzugt entsprechend dem Durchmesser der Welle 2 im Lagerbereich angepasst.

Die Erweiterung 15 weist weiter ausgehend von der Topföffnungsebene eine größere axiale Länge auf als der hier einliegende und sich an der Wandung der Erweiterung 15 abstützende Außenring 14.
Die Topföffnung und hierbei entsprechend auch insbesondere das obere Wälzlager 3 sind überdeckt von einem Deckel 17. Der Deckel 17 ist hierbei angepasst an die konische Außengestaltung des Aufnahmeteiles 5. Die der Konusfläche 9 des Aufnahmeteiles 5 zugewandte Fläche des Deckels 17 ist gleichfalls angepasst konisch ausgebildet.

Die Welle 2 durchsetzt den Deckel 17 im Bereich einer Durchtrittsöffnung.
Der Deckel 17 wird mit dem Aufnahmeteil 5 befestigt, beispielsweise verklebt.

Die Innen- und Außenringe der Wälzlager 3 und 4, wie auch bevorzugt das Distanzteil 11 sind aus einem Metallwerkstoff gebildet. Auch das Aufnahmeteil 5 wie auch der Deckel 17 können aus einem solchen Metallwerkstoff bestehen, alternativ aus einem hochfesten Hartkunststoff.

Zum Einbringen insbesondere der Wälzlager 3 und 4 in das Aufnahmeteil 5 dient in bevorzugter Ausgestaltung ein Fügewerkzeug 29. In alternativer Ausgestaltung wird die Welle 2 als Fügewerkzeug genutzt.

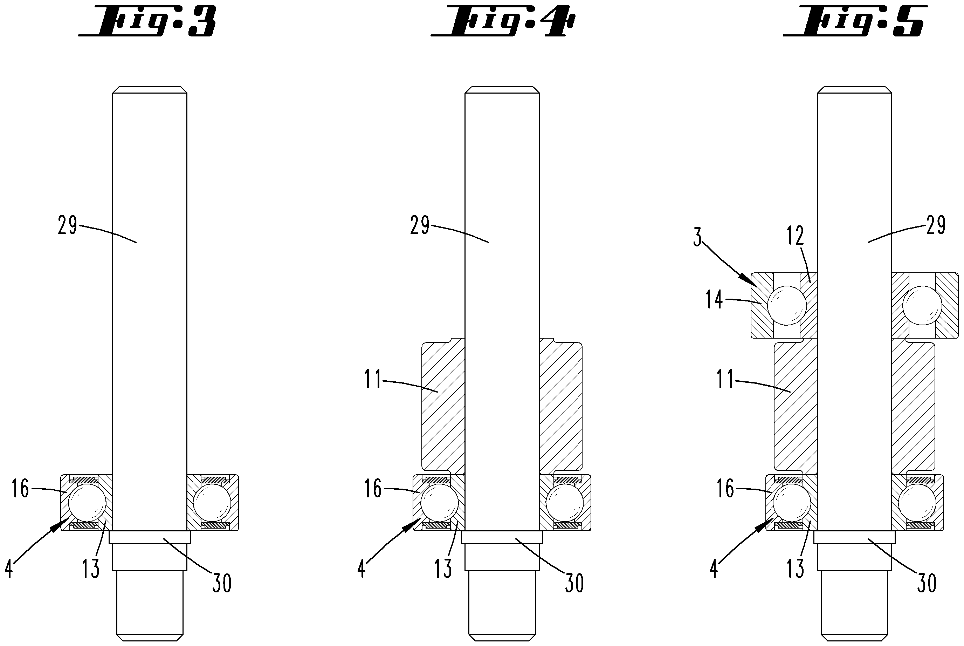

Das Fügewerkzeug 29 ist bevorzugt als rotationssymmetrisches, stabförmiges Teil gebildet, mit einem Außendurchmesser, der im Wesentlichen an den Außendurchmesser der später einzusetzenden Welle 2 angepasst ist. Weiter verfügt das Fügewerkzeug 29 über eine radial erweiterte Stufe 30, auf welcher sich das zunächst aufgefädelte Wälzlager 4 gemäß der Darstellung in Figur 3 abstützt.

Hierbei stützt sich das Wälzlager 4 bevorzugt mit dessen Innenring 13 auf der Stufe 30 ab.

Hiernach wird bevorzugt das hülsenförmige Distanzteil 11 auf das Fügewerkzeug 29 aufgefädelt, abschließend das hinsichtlich des Außenringes 14 durchmessergrößere Wälzlager 3.

Derart vormontiert wird das Fügewerkzeug 29 mit den Wälzlagern 3 und 4 sowie dem Distanzteil 11 in das Aufnahmeteil 5 von einer Seite her - bevorzugt von der späteren Abtriebsseite - eingebracht, wobei zuvor bevorzugt die umlaufenden Lagersitze 31 und 32 im Bereich der Topfwandung 7 mit Klebstoff K benetzt sind.

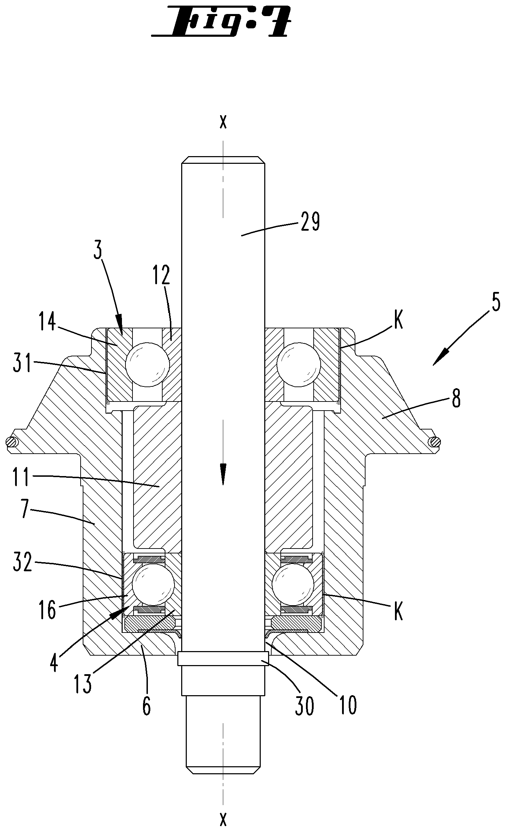

Figur 7 zeigt eine abschließende Stellung, in welcher die Wälzlager 3 und 4 mit dem dazwischengeschalteten Distanzteil 11 in eine zumindest erste Festlegungsposition in dem Aufnahmeteil 5 gebracht sind.

Das Fügewerkzeug 29 kann hiernach in Einbringungsrichtung a durch die Öffnung im Topfboden 6 des Aufnahmeteiles 5 herausgezogen werden, wonach beispielsweise unter Nutzung des Deckels 17 die endgültige Festlegung insbesondere des Wälzlagers 3 erfolgt, dies bevorzugt unter Kraftbeaufschlagung des Wälzlagers 3 in Axialrichtung, zum Einstellen einer vorgegebenen Lagervorspannung zwischen den beiden Wälzlagern 3 und 4 in Axialrichtung.

Im Zuge der Belastung und der Einstellung der Vorspannung ist eine axiale Verlagerung des Wälzlagers 3, d.h. eine relative Verlagerung dessen Außenringes 14 zur zugewandten Wandung der Erweiterung 15 möglich.

Die Belastung wird hiernach bis zum Aushärten des Klebstoffs K beibehalten, wonach das Wälzlager 3 in der gefundenen Axialstellung innerhalb der Erweiterung 15 des Aufnahmeteiles 5 fixiert ist. Die gefundene Stellung zur Erhaltung der Lagervorspannung wird quasi eingefroren.

## Patentansprüche

1. Einbauteil (1), beispielsweise einer Küchenmaschine, mit
- einer Welle (2),
- zwei axial hintereinander positionierten Wälzlagern (3,4),
- einem Aufnahmeteil (5) und
- einem Distanzteil (11),
wobei die Wälzlager (3, 4) jeweils einen Innenring (12, 13) und einen Außenring (14, 16) aufweisen,
wobei die Welle (2) mittels der Wälzlager (3, 4) in dem von der Welle (2) durchsetzten topfförmigen, einen im Topfboden mittig ausgebildeten Durchlass (10) für die Welle (2) aufweisenden Aufnahmeteil (5) gelagert ist,
wobei beide Außenringe (14, 16) mit dem Aufnahmeteil (5) verklebt sind und die Außenringe (14, 16) unterschiedliche Außendurchmesser aufweisen, während die Innenringe (12, 13) denselben Innendurchmesser aufweisen,
wobei der durchmesservergrößerte Außenring (14) in einer axial verbreiterten, sich zu einer Topföffnung hin öffnenden Erweiterung (15) eines Topfinneren einsitzt, während sich der Außenring (16) des unteren Wälzlagers (4) unmittelbar an der Topfinnenwandung abstützt,
wobei weiter die Erweiterung (15) ausgehend von einer Topföffnungsebene eine größere axiale Länge aufweist als der einliegende und sich an der Wandung der Erweiterung (15) abstützende Außenring (14),
wobei weiter das untere Wälzlager (4) sich auf dem Topfboden (6) abstützt und die Wälzlager (3, 4) in Erstreckungsrichtung der Welle (2) zueinander beabstandet sind, wobei ein Distanzteil (11) zwischen den Wälzlagern (3, 4) vorgesehen ist, das von der Welle (2) durchsetzt ist und die Wälzlager (3, 4) im Bereich der Innenringe abstützt,
wobei weiter der obere, dem Abtriebsende der Welle (2) zugeordnete Außenring (14) an der zugeordneten Innenfläche des Aufnahmeteils (5) allein durch Verklebung gehalten ist und vor einer Aushärtung des Klebstoffes in seinem Axialsitz bis zum Erreichen der vorgegebenen Lagervorspannung in Axialrichtung der Welle (2) betrachtet verlagerbar ist.

## Claims

1. Built-in part (1), for example for a kitchen appliance, comprising
- a shaft (2),
- two rolling bearings (3, 4) positioned axially one behind the other,
- a receiving part (5) and
- a spacer (11),
wherein each of the rolling bearings (3, 4) comprises an inner ring (12, 13) and an outer ring (14, 16),
wherein the shaft (2) is mounted by means of the rolling bearings (3, 4) in the pot-shaped receiving part (5), through which the shaft (2) passes and which has a passage (10) formed centrally in the bottom of the pot for the shaft (2),
wherein the two outer rings (14, 16) are glued to the receiving part (5) and the outer rings (14, 16) have different external diameters, whereas the inner rings (12, 13) have the same internal diameter,
wherein the outer ring (14) having an increased diameter is accommodated in an axially widened expanded region (15) of the inside of the pot, which expanded region opens towards the pot opening, whereas the outer ring (16) of the lower rolling bearing (4) is directly supported on the inner wall of the pot,
wherein, furthermore, starting from a pot-opening plane, the expanded region (15) has a greater axial length than the outer ring (14) lying therein that is supported on the wall of the expanded region (15),
wherein, furthermore, the lower rolling bearing (4) is supported on the bottom (6) of the pot and the rolling bearings (3, 4) are mutually spaced in the extension direction of the shaft (2), wherein a spacer (11) is provided between the rolling bearings (3, 4), through which spacer the shaft (2) passes and which spacer supports the rolling bearings (3, 4) in the region of the inner rings, wherein, furthermore, the upper outer ring (14) that is associated with the output end of the shaft (2) is held on the associated inner face of the receiving part (5) merely by glueing and, when viewed in the axial direction of the shaft (2), before the adhesive has cured, can be displaced in its axial position until the predefined bearing pretension is achieved.

## Revendications

1. Partie incorporée (1), par exemple d'un appareil de cuisine, comprenant
- un arbre (2),
- deux paliers à roulement (3, 4) positionnés axialement l'un derrière l'autre,
- une pièce de montage (5), et
- une entretoise (11),
dans laquelle les paliers de roulement (3, 4) ont chacun une bague intérieure (12, 13) et une bague extérieure (14, 16),
dans laquelle l'arbre (2) est monté au moyen des paliers à roulement (3, 4) dans la pièce de montage en forme de pot (5) qui est traversée par l'arbre (2) et comporte un passage (10) pour l'arbre (2) formé centralement dans le fond du pot,
dans laquelle les deux bagues extérieures (14, 16) sont collées à la pièce de montage (5) et les bagues extérieures (14, 16) ont des diamètres extérieurs différents, tandis que les bagues intérieures (12, 13) ont le même diamètre intérieur,
dans laquelle la bague extérieure (14) de diamètre agrandi est placée dans une extension (15) élargie axialement d'un intérieur du pot laquelle s'ouvre vers une ouverture du pot, tandis que la bague extérieure (16) du palier à roulement inférieur (4) est supportée directement par la paroi intérieure du pot,
dans laquelle en outre l'extension (15) a une longueur axiale à partir d'un plan d'ouverture du pot qui est plus grande que la bague extérieure (14) qui est placée et supportée par la paroi de l'extension (15),
dans laquelle le palier à roulement inférieur (4) est en appui sur le fond du pot (6) et les paliers à roulement (3, 4) sont espacés l'un de l'autre dans la direction d'extension de l'arbre (2), une entretoise (11) étant prévue entre les paliers à roulement (3, 4) laquelle est traversée par l'arbre (2) et supporte les paliers à roulement (3, 4) dans la zone des bagues intérieures,
dans laquelle en outre la bague extérieure supérieure (14) associée à l'extrémité de sortie de l'arbre (2) est maintenue sur la surface intérieure associée de la pièce de montage (5) uniquement par collage et est déplaçable dans son logement axial jusqu'à ce que la précharge de palier prédéterminée dans la direction axiale de l'arbre (2) soit atteinte avant durcissement de l'adhésif.
